# FASCICULE DE BREVET EUROPEEN

(11) **EP 2 458 700 B1**
(45) Date de publication et mention de la délivrance du brevet: **18.02.2015**
(21) Numéro de dépôt: 11290488.3
(22) Date de dépôt: 21.10.2011
(51) Int. Cl.: H02G 3/18, A47B 21/06

(54) **Appareillage électrique à support d'appareillage basculant**
Elektrisches Gerät mit Stützvorrichtung für ein schwenkbares Gerät
Electrical appliance with tilting appliance mounting

(30) Priorité: 29.11.2010 FR 1004626
(43) Date de publication de la demande: 30.05.2012
(73) Titulaire: Legrand France, 87000 Limoges (FR); Legrand SNC, 87000 Limoges (FR)
(72) Inventeur: Mendez, Pascal, 87170 Isle (FR); Laurent, Vincent, 53600 Evron (FR); Lu Bao, Chun, 102200 Beijing (CN); Shen, Tao, 102200 Beijing (CN)
(74) Mandataire: Orsini, Fabienne

(56) Documents cités:
- JP-A- 4 244 718
- JP-A- 6 098 444
- KR-A- 20090 083 053

## Description

### DOMAINE TECHNIQUE AUQUEL SE RAPPORTE L'INVENTION

La présente invention concerne, de manière générale, les appareillages électriques à encastrer dans une paroi, dont le mécanisme est monté sur un support basculant pour disparaître sous la paroi ou être accessible en saillie d'une telle paroi.

L'invention trouve une application particulièrement avantageuse dans la réalisation d'une prise de courant de sol ou de bureau ou encore murale.

L'invention concerne plus particulièrement un appareillage électrique qui comprend :
- une plaque de finition présentant une ouverture,
- un support d'appareillage monté à basculement au travers de ladite ouverture entre une position abaissée dans laquelle il s'étend en dessous de la plaque de finition et une position relevée dans laquelle il s'étend en majeure partie au-dessus de la plaque de finition, et
- un système de verrouillage qui comporte un loquet monté en translation par rapport à la plaque de finition dans un plan parallèle au plan moyen de cette dernière, des moyens de rappel qui poussent en permanence le loquet vers une position de verrouillage dans laquelle il fait saillie à l'intérieur de ladite ouverture pour bloquer ledit support d'appareillage dans l'une ou l'autre de ses positions abaissée et relevée, et un bouton d'actionnement du loquet, qui, dans une position d'actionnement, est apte à être déplacé en translation parallèlement au plan moyen de la plaque de finition pour tirer le loquet à l'encontre desdits moyens de rappel en retrait de sa position de verrouillage.

### ARRIERE-PLAN TECHNOLOGIQUE

On connaît déjà notamment des documents KR20090071028, KR20090083053, CN2867645, CN2845219 et CN2741224, des appareillages électriques du type précité dans lesquels il suffit de tirer sur le bouton d'actionnement pour déplacer le loquet et libérer le support d'appareillage.

Dans ce type d'appareillage électrique, il est prévu un système d'éjection automatique qui pousse en permanence le support d'appareillage vers sa position relevée en saillie de la plaque de finition qui s'appuie contre la paroi d'encastrement.

Ainsi, lorsque le support d'appareillage est bloqué en position abaissée sous la plaque de finition, une simple action de tirage du bouton d'actionnement permet de l'éjecter en position relevée en saillie de la paroi d'encastrement.

Si cet appareillage électrique est encastré dans le sol, un usager peut, de manière intempestive, actionner le bouton d'actionnement avec le pied et libérer accidentellement le support d'appareillage qui, sous l'action du système d'éjection, sort du sol en position relevée. Ce support forme alors un obstacle sur lequel bute le pied de l'usager, ce qui peut provoquer la chute de l'usager et la dégradation de l'appareillage électrique.

En outre, dans un tel appareillage électrique connu, la position du loquet est telle qu'en fin de course de basculement du support d'appareillage, il frotte sur une partie centrale de l'enjoliveur rapporté sur le support d'appareillage. Ce frottement répété dégrade l'enjoliveur ce qui nuit à l'esthétique de l'appareillage.

### OBJET DE L'INVENTION

Afin de remédier aux inconvénients précités de l'état de la technique, la présente invention propose un appareillage électrique tel que défini dans la revendication 1.

Ainsi, avantageusement, selon l'invention, il convient d'agir selon deux actions combinées sur le bouton d'actionnement, à savoir, une action d'enfoncement et une action de tirage, pour déplacer le loquet. Ces actions combinées ne peuvent pas être réalisées de manière intempestive. La sécurité d'ouverture ou de fermeture du système de verrouillage est alors renforcée.

D'autres caractéristiques non limitatives et avantageuses de l'appareillage électrique selon l'invention sont énoncées dans les revendications 2 à 15.

### DESCRIPTION DETAILLEE D'UN EXEMPLE DE REALISATION

La description qui va suivre en regard des dessins annexés, donnée à titre d'exemple non limitatif, fera bien comprendre en quoi consiste l'invention et comment elle peut être réalisée.

Sur les dessins annexés :
- la figure 1 est une vue schématique en perspective de dessus d'un appareillage électrique selon l'invention équipé et en position relevée ;
- la figure 2 est une vue schématique de détail d'un appareillage électrique selon l'invention non équipé, en position relevée, avec un arraché partiel de la plaque de finition pour montrer le système de verrouillage dans la position de repos relevée de son bouton d'actionnement ;

- la figure 3 est une vue identique à celle de la figure 2 avec le bouton d'actionnement du système de verrouillage enfoncé dans la position d'actionnement abaissée;
- la figure 4 est une vue identique à celle de la figure 2 avec le bouton d'actionnement du système de verrouillage enfoncé et tiré dans la position d'actionnement abaissée;
- la figure 5 est une vue identique à celle de la figure 2 avec le bouton d'actionnement du système de verrouillage placé dans la position de repos relevée et le support d'appareillage en cours d'abaissement ;
- la figure 6 est une vue schématique de détail de la figure 1, le support d'appareillage étant pratiquement abaissé, avec un arraché partiel de la plaque de finition et du bouton d'actionnement pour montrer le système de verrouillage dans la position de repos relevée de son bouton d'actionnement et le loquet en appui sur un pan en biseau du support d'appareillage juste avant de prendre sa position de verrouillage du support d'appareillage en position abaissée ;
- la figure 7 est une vue identique à celle de la figure 6 avec le support d'appareillage en position abaissée et le loquet du système de verrouillage en position de verrouillage ;
- la figure 8 est une vue schématique en perspective d'un appareillage électrique selon l'invention non équipé et en position abaissée ;
- la figure 9 une vue schématique de détail d'un appareillage électrique selon l'invention non équipé, le support d'appareillage étant pratiquement relevé, avec un arraché partiel de la plaque de finition pour montrer le système de verrouillage dans la position de repos relevée de son bouton d'actionnement et le loquet en appui sur un pan en biseau du support d'appareillage juste avant de prendre sa position de verrouillage du support en position relevée ;
- les figures 10, 11 et 12 sont des vues de détail du bouton d'actionnement partiellement arraché et de son logement dans la plaque de finition, respectivement dans la position de repos relevée, la position d'actionnement abaissée et la position d'actionnement abaissée et tirée ;
- la figure 13 est une vue schématique éclatée de la plaque de finition et du système de verrouillage de l'appareillage électrique selon l'invention ; et
- la figure 14 est une vue schématique en perspective de dessous d'un appareillage électrique selon l'invention non équipé et en position abaissée.

On notera que, dans la suite de la description, l'appareillage électrique sera décrit tel qu'il apparaît à l'utilisateur lorsqu'il est monté dans une paroi d'encastrement. Dans la description, les termes « avant » et « arrière » seront définis par rapport au regard d'un utilisateur. Ainsi, une face avant sera orientée vers l'utilisateur tandis qu'une face arrière sera orientée à l'opposé de l'utilisateur.

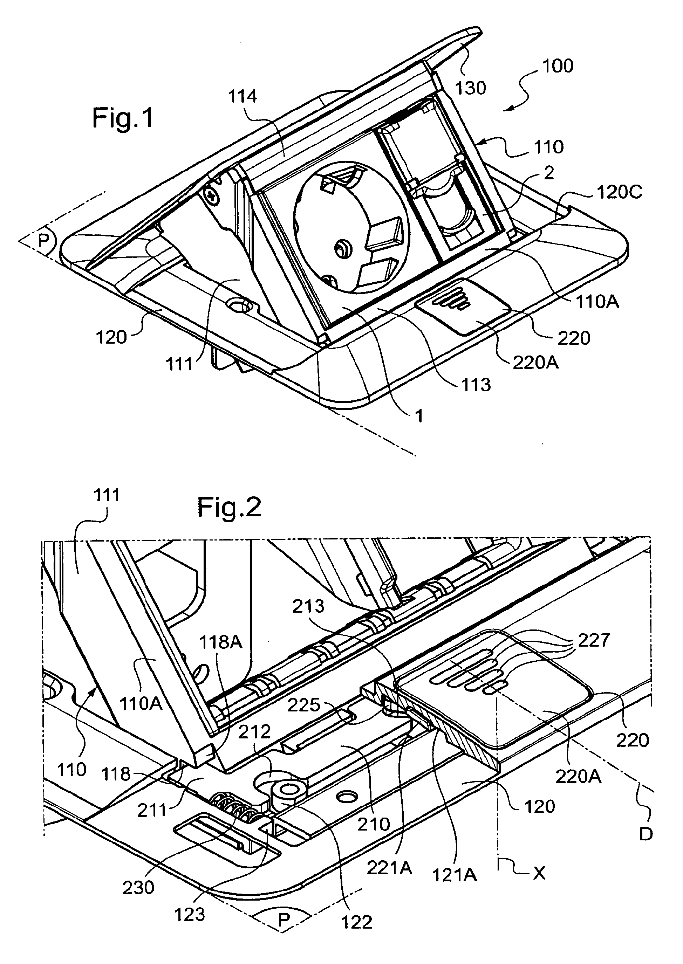

Sur les figures 1, 8 et 14 on a représenté un appareillage électrique 100, ici une multiprise de courant de sol à encastrer dans un plancher technique.

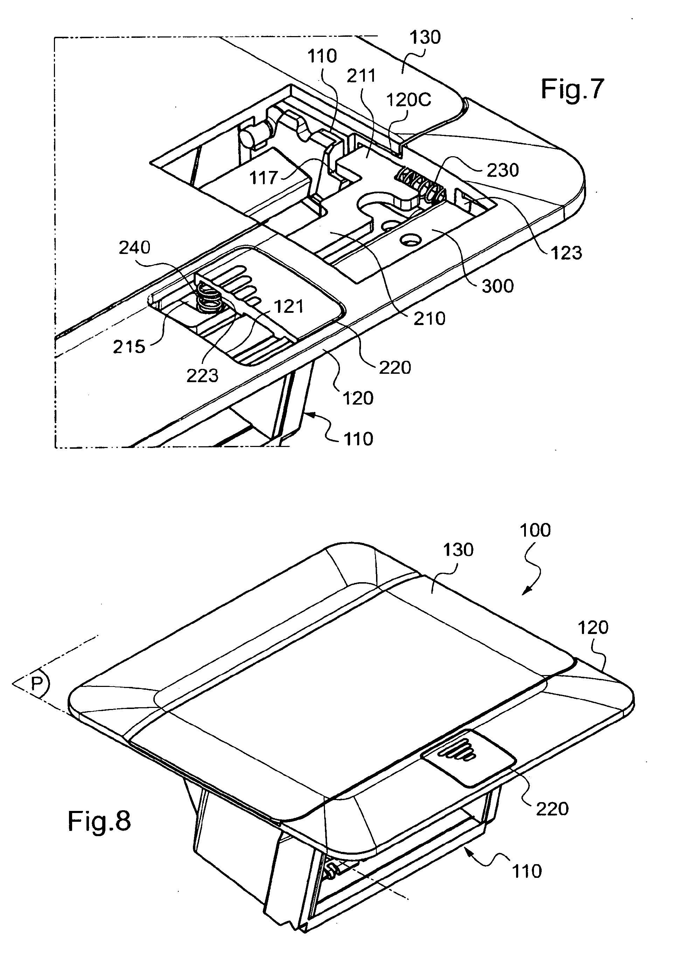

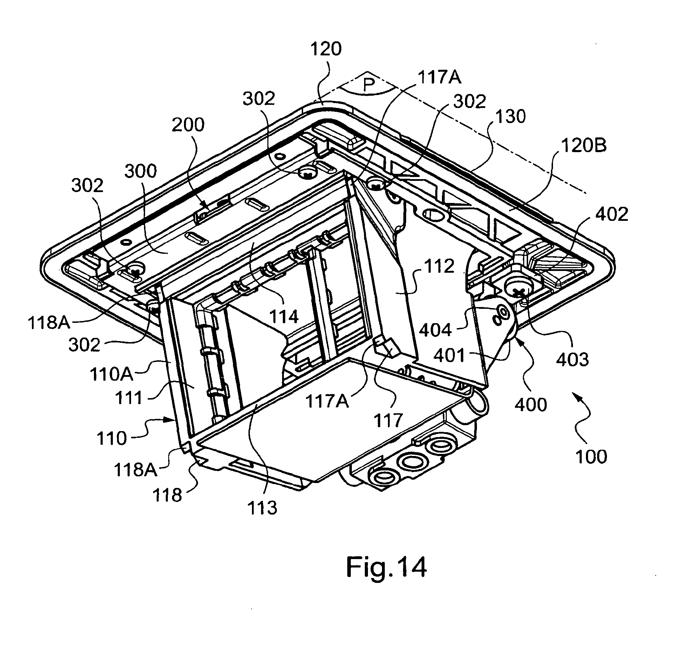

Cet appareillage électrique 100 comprend
- une plaque de finition 120 présentant une ouverture, ici une ouverture centrale,
- un support d'appareillage 110 monté à basculement au travers de ladite ouverture centrale entre une position abaissée dans laquelle il s'étend en dessous de la plaque de finition 120 (figures 8 et 14) et une position relevée dans laquelle il s'étend en majeure partie au-dessus de la plaque de finition 120 (figure 1), et
- un système de verrouillage 200 pour bloquer le support d'appareillage 110 dans l'une ou l'autre de ses positions abaissée et relevée.

La plaque de finition 120 est avantageusement réalisée en matière métallique. Elle est destinée à s'appliquer contre la face avant de la paroi d'encastrement de l'appareillage électrique, ici la face avant du plancher technique non représenté.

Cette plaque de finition 120 se présente sous la forme d'un cadre relativement plat dont le bord extérieur suit ici un contour carré. Bien entendu, en variante, on pourrait prévoir que la plaque de finition présente un contour extérieur rectangulaire ou circulaire.

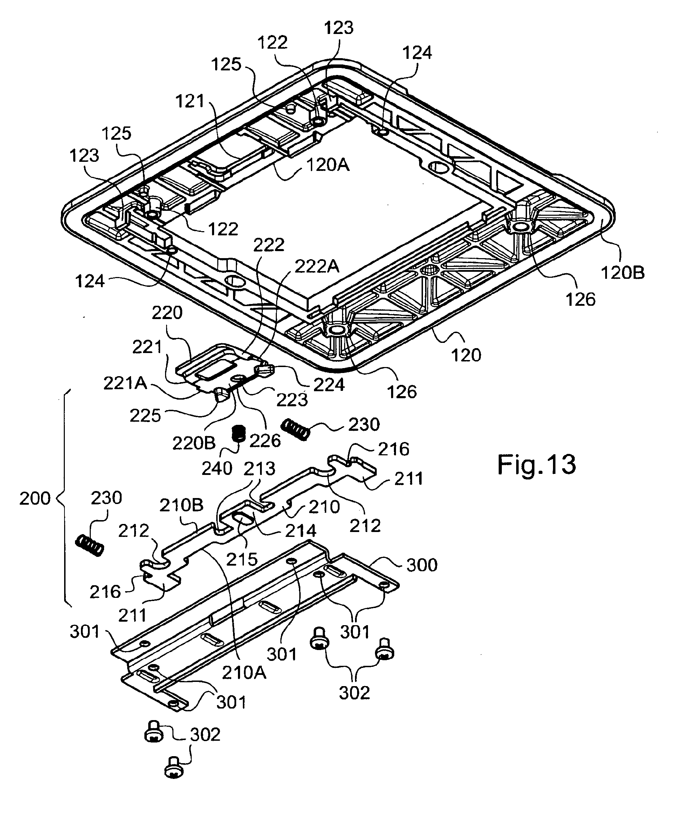

Selon l'exemple représenté, le bord intérieur de la plaque de finition 120 délimite une ouverture centrale rectangulaire (figure 13) mais on pourrait également prévoir, selon d'autres variantes non représentées, que ce bord intérieur délimite une ouverture carrée ou circulaire. On pourrait également prévoir que la plaque de finition pour un appareillage multiposte, comprenne plusieurs ouvertures destinées chacune à recevoir un support d'appareillage basculant.

La face avant de la plaque de finition 120 confère l'esthétique de l'ensemble (figures 1 et 8), tandis que sa face arrière porte des éléments techniques comme, des nervures de renfort, des éléments de butée 123, des cheminées 122, 126, des orifices 124 et des plots 125 pour la fixation de différents éléments de l'appareillage électrique qui seront explicités plus en détail ultérieurement (figures 13 et 14). La face arrière comporte le long du bord extérieur de la plaque de finition 120, une surface plane 120B pour prendre appui contre la paroi d'encastrement (figure 13). Cette surface plane 120B d'appui de la plaque de finition 120 pourrait avantageusement se situer en retrait pour recevoir un joint d'étanchéité à l'eau et aux poussières, ce joint permettant d'épouser les irrégularités éventuelles de la paroi d'encastrement.

Le support d'appareillage 110 est réalisé avantageusement en matière métallique. Il comporte deux parois principales 111, 112 parallèles qui s'étendent perpendiculairement au plan moyen P de la plaque de finition 120 (figures 1 et 14). Ces parois principales 111, 112 sont, à l'arrière du support, liées aux deux extrémités d'un arbre d'un mécanisme de basculement 400. À l'avant du support d'appareillage 110, les parois principales 111, 112 sont liées entre elles par une poutre transversale inférieure 113. À l'arrière du support d'appareillage 110 mais en avant du mécanisme de basculement 400, les parois principales 111, 112 sont également liées entre elles par une poutre transversale supérieure (non référencée). Les parois principales 111, 112 et les poutres transversales inférieure 113 et supérieure sont issues d'une seule et même pièce monobloc.

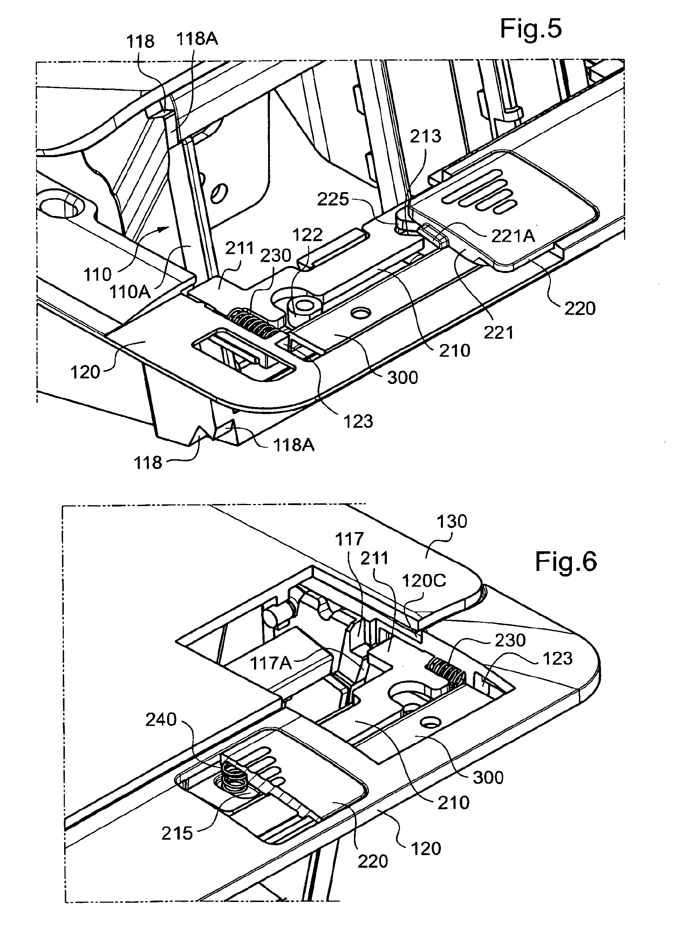

En partie supérieure, à l'opposé de la poutre transversale inférieure 113, un couvercle 130 est fixé aux deux parois principales 111, 112. Le couvercle 130 est formé d'une plaque qui s'étend perpendiculairement aux parois principales 111, 112. Il ferme l'espace délimité entre lesdites parois principales 111, 112 et déborde de part et d'autre de cet espace. Le couvercle 130 est destiné à fermer l'ouverture centrale de la plaque de finition 120 lorsque le support d'appareillage 110 est basculé en position abaissée (figure 8). Comme le montrent les figures 1 et 8, le couvercle 130 présente une forme rectangulaire dont la longueur est égale à la longueur d'un côté de la plaque de finition 120 et dont la largeur correspond à la largeur de l'ouverture centrale de la plaque de finition 120. La plaque de finition 120 comporte en face avant un renfoncement 120C destiné à accueillir le couvercle 130 lorsque le support d'appareillage 110 est basculé en position abaissée (figures 1, 6, 7 et 8). Ce renfoncement 120C présente au jeu près les dimensions du couvercle 130. Il présente en particulier une profondeur égale à l'épaisseur du couvercle 130 (voir figures 6 et 7), si bien que lorsque le couvercle 130 est placé dans le renfoncement 120C de la plaque de finition 120 sa face avant affleure la face avant de la plaque de finition 120 pour former une continuité de parois (figure 8). C'est pour cela que la face avant du couvercle 130 présente un aspect esthétique qui s'harmonise avec l'aspect esthétique de la face avant de la plaque de finition 120.

Le couvercle 130 porte sur sa face arrière une poutre transversale supérieure 114, qui s'étend, en partie supérieure, à l'avant du support, transversalement, d'une paroi principale 111 à l'autre 112 du support d'appareillage 110 (figures 1 et 14). Le couvercle 130 et la poutre transversale supérieure 114 sont issus d'une même pièce monobloc.

Les poutres transversales inférieure 113 et supérieure 114 du support d'appareillage 110 sont parallèles.

Ainsi, à l'avant du support d'appareillage 110, c'est-à-dire à l'opposé du mécanisme de basculement 400, les parois principales 111, 112 et les poutres transversales inférieure 113 et supérieure 114 forme un cadre rectangulaire qui délimite un logement d'insertion de différents mécanismes d'appareillage comme des mécanismes de prise de courant 1 ou de connecteur réseau 2 à monter sur le support d'appareillage 110 (figure 1).

Comme le montre la figure 1, à l'avant, les tranches des parois principales 111, 112 et des poutres inférieure et supérieure 113, 114 forment la face avant 110A du support d'appareillage 110. Cette face avant 110A est plane et elle entoure les faces avant fonctionnelles des mécanismes d'appareillage 1, 2 rapportés dans le logement d'insertion et montés sur le support d'appareillage 110.

À l'arrière, comme le montre plus particulièrement la figure 14, le mécanisme de basculement 400 est un mécanisme classique qui ne fait pas partie à proprement dit de la présente invention. Il ne sera donc pas ici décrit dans le détail. Il comprend un cylindre 401 traversé par un arbre aux extrémités 404 duquel sont fixées les parois principales 111, 112 du support d'appareillage 110. À l'intérieur du cylindre, est enroulé autour de l'arbre un ressort de torsion sous contrainte. Le ressort de torsion lié à l'arbre a tendance à faire pivoter l'arbre pour faire basculer le support d'appareillage 110 muni de couvercle 130 vers sa position relevée. Le cylindre 401 est solidaire d'une platine 402 fixée par des vis 403 à la face arrière de la plaque de finition 120. Ces vis 403 sont vissées dans des cheminées 126 taraudées prévues sur la face arrière de la plaque de finition 120.

C'est donc par l'intermédiaire de cette platine 402 à laquelle est solidarisé le mécanisme de basculement 400 auquel est fixé le support d'appareillage 110 que ledit support d'appareillage 110 est suspendu à la plaque de finition 120 de l'appareillage électrique 100.

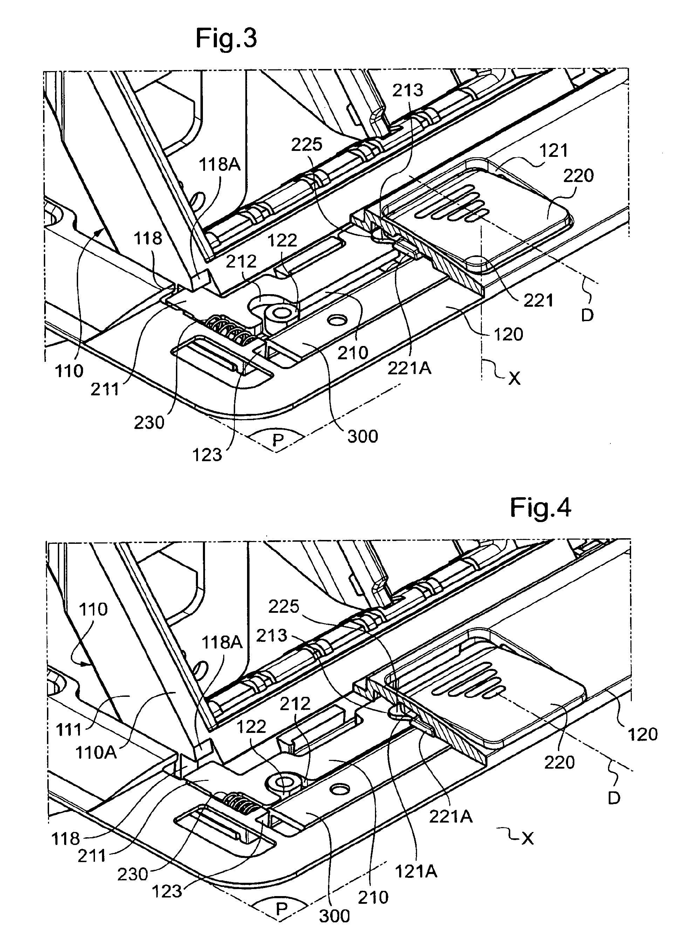

Comme le montre plus particulièrement les figures 3, 4 et 13, le système de verrouillage 200 comporte un loquet 210 monté en translation suivant une direction D par rapport à la plaque de finition 120 dans un plan parallèle au plan moyen P de cette dernière, des moyens de rappel 230 qui poussent en permanence le loquet 210 vers une position de verrouillage dans laquelle il fait sailli à l'intérieur de l'ouverture de la plaque de finition 120 pour bloquer ledit support d'appareillage 110 dans l'une ou l'autre de ses positions abaissée et relevée, et un bouton d'actionnement 220 du loquet 210, qui, dans une position d'actionnement, est apte à être déplacé en translation suivant la direction D, parallèlement au plan moyen P de la plaque de finition 120 pour tirer le loquet 210 à l'encontre desdits moyens de rappel 230 en retrait de sa position de verrouillage (figures 3 et 4).

Selon une caractéristique particulièrement avantageuse et préférentielle de l'appareillage électrique 100, le bouton d'actionnement 220 est adapté à être déplacé en translation suivant un axe X perpendiculaire au plan moyen P de la plaque de finition 120, entre une position de repos relevée (figure 2) dans laquelle il est placé à distance du loquet 210 et la position d'actionnement abaissée (figures 3 et 4) dans laquelle il coopère avec le loquet 210.

Le loquet 210 est une plaquette allongée montée dans un logement délimité entre la face arrière de la plaque de finition 120, le long d'un côté 120A de l'ouverture centrale de ladite plaque de finition 120, et une plaque de fermeture 300 fixée par des vis 302 sur la face arrière de la plaque de finition 120 (figures 13 et 14).

Le loquet 210 est alors adapté à se déplacer en translation selon la direction D perpendiculaire au côté 120A correspondant de la plaque de finition 120 qui longe son ouverture centrale.

Comme le montre plus particulièrement la figure 13, la plaque de fermeture 300, préférentiellement métallique, est percée d'ouvertures traversantes 301 pour le passage des vis 302 de fixation. Elle comporte également deux ouvertures traversantes 301 destinées à s'engager sur deux plots 125 de positionnement de la plaque de finition 120 (figure 14).

Comme le montrent les figures 3 à 7 et 9, le loquet 210 s'étend en longueur sur toute la largeur du support d'appareillage 110, à l'avant dudit support, le long de la poutre transversale inférieure 113 ou supérieure 114. Le loquet 210 comprend, au moins à une extrémité, une patte de blocage 211 adaptée à s'engager dans deux encoches 117, 118 prévues dans deux coins de la face avant du support d'appareillage 110, à la jonction d'une poutre transversale inférieure 113 ou supérieure 114 et d'une paroi principale 111, 112, pour bloquer ledit support d'appareillage 110 dans ses positions abaissée (figure 7) et relevée (figure 3).

Ici, avantageusement, le loquet 210 comprend à chaque extrémité une patte de blocage 211 (figure 13) et le support d'appareillage 110 comporte en correspondance quatre encoches 117, 118 prévues aux quatre coins de sa face avant (figure 14).

Les pattes de blocage 211 font saillie de la tranche arrière 210A du loquet 210 tournée vers le support d'appareillage 110 , tandis que la tranche avant 210B opposée du loquet 210 tournée vers la plaque de finition 120 comporte une pluralité d'encoches 212, 213, 216 (figure 13). Deux de ces encoches 213, sensiblement en forme de queue d'aronde, sont situées à proximité et de part et d'autre d'une partie centrale du loquet 210 qui s'étend sous le bouton d'actionnement 220.

Les moyens de rappel qui poussent en permanence le loquet 210 vers sa position de verrouillage, comprennent deux ressorts de compression 230 qui interviennent entre des parties 123, ici des butées, de la plaque de finition 120 et les extrémités du loquet 210. Plus particulièrement, chaque ressort de compression 230 prend appui contre le fond d'une encoche 216 du loquet 210, au dos d'une patte de blocage 211 (figure 13).

Avantageusement, comme le montrent plus particulièrement les figures 3, 4, 6 et 14, la face avant 110A plane du support d'appareillage 110 comporte un pan 117A, 118A en biseau (ici droit mais il peut s'agir d'une surface courbe dans une variante non représentée) qui établit la jonction entre ladite face avant et le bord de chaque encoche 117, 118.

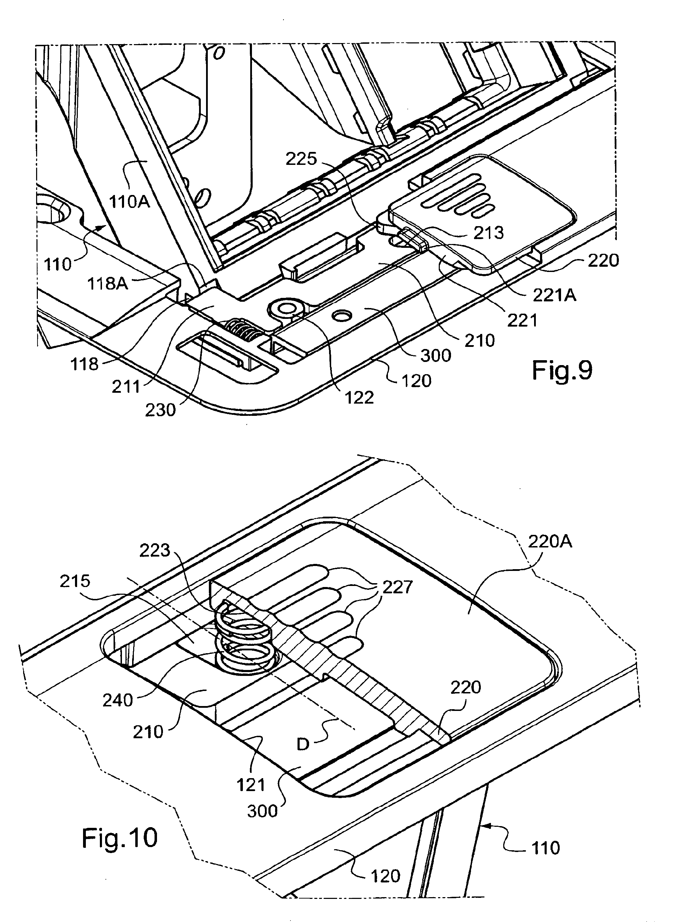

En outre, comme le montrent les figures 6, 7, 10, 11, 12 et 13, il est prévu un moyen de rappel 240, interposé entre le loquet 210 et le bouton d'actionnement 220, qui pousse en permanence ledit bouton d'actionnement 220 vers sa position de repos relevée (figure 10). Ce moyen de rappel est un ressort de compression 240 dont une partie est logée dans un premier logement 223 prévu en creux dans la face arrière 220B du bouton d'actionnement 220 et dont une autre partie prend appui sur le fond d'un deuxième logement 215 prévu en creux dans la face avant de la partie centrale du loquet 210. Ce deuxième logement 215 présente une forme allongée suivant la direction de translation D du loquet 210. Ici, préférentiellement, le deuxième logement 215 présente une forme oblongue.

Par ailleurs, comme le montrent les figures 3 et 4, il est prévu sur le bouton d'actionnement 220 et sur le loquet 210 des moyens de coopération de forme qui coopèrent ensemble lorsque ledit bouton d'actionnement est en position d'actionnement abaissée. Ces moyens de coopération de forme sont des moyens d'emboîtement.

Selon l'exemple représenté, les moyens de coopération de forme comprennent au moins un plot 225 prévu en saillie sur la face arrière 220B du bouton d'actionnement 220 et au moins un logement 213 de forme complémentaire au plot, prévu en creux dans la face avant du loquet 210.

Plus particulièrement, comme le montre la figure 13, le bouton d'actionnement 220 comporte aux deux coins arrière de sa face arrière 220B, deux plots 225, 224 sensiblement au contour de queue d'aronde, qui font saillie de deux bords latéraux 221, 222 parallèles et du bord arrière 226 du bouton d'actionnement 220.

En correspondance, le loquet 210 comporte les deux encoches 213, sensiblement en forme de queue d'aronde, situées à proximité et de part et d'autre de la partie centrale du loquet 210.

Comme le montrent les figures 10 à 12, le bouton d'actionnement 220 comporte sur sa face avant 220A des nervures 227 pour agripper le doigt d'un utilisateur et éviter que celui-ci ne glisse lors de l'actionnement dudit bouton. Le bouton d'actionnement 220 est monté dans une ouverture traversante de la plaque de finition 120 dont le bord 121 est adapté à guider les mouvements de translation du bouton d'actionnement 220.

Le bouton d'actionnement 220 comporte deux ailettes 221A, 222A en saillie sur deux bords 221, 222 parallèles et la plaque de finition 120 comporte sur sa face arrière, le long de deux côtés du bord 121 de ladite ouverture qui s'étendent selon la direction de translation D du bouton d'actionnement 220, deux rainures 121A étagées dans lesquelles sont engagées lesdites ailettes 221A, 222A (voir figures 2 à 4).

En référence aux figures 2 à 12, nous allons décrire le fonctionnement de l'appareillage électrique 100.

Sur la figure 2, le support d'appareillage 110 est en position relevée. Le bouton d'actionnement 220 est en position de repos relevée (figure 10) à distance du loquet 210, sans coopérer avec lui. Le loquet 210 est poussé par les ressorts de compression 230 en position de verrouillage, ses pattes de blocage 211 étant engagées dans les encoches 118 inférieures correspondantes du support d'appareillage 110.

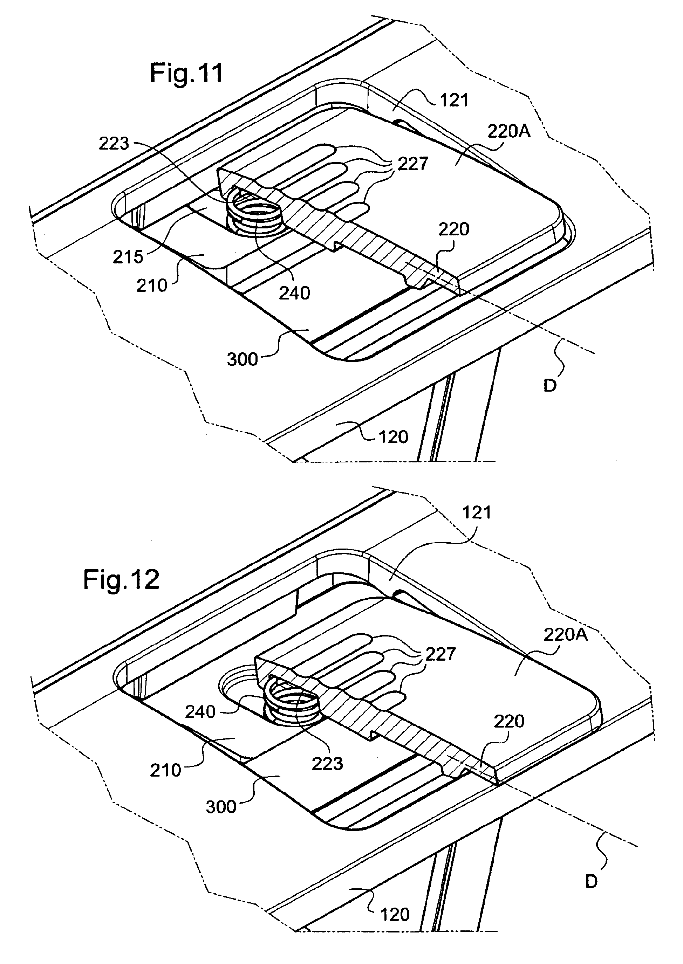

Pour abaisser le support d'appareillage 110 en dessous de la plaque de finition 120, l'utilisateur appuie sur le bouton d'actionnement 220 pour l'enfoncer dans l'ouverture de la plaque de finition 120 en position d'actionnement abaissée. Dans cette position d'actionnement abaissée (figure 11), les plots 225 du bouton d'actionnement 220 sont engagés dans les encoches 213 du loquet 210 de manière que le bouton d'actionnement 220 et le loquet 210 sont liés l'un à l'autre, comme cela est représenté sur la figure 3. Cependant, le loquet 210 n'a pas bougé et il verrouille toujours le support d'appareillage 110 dans sa position relevée.

L'utilisateur tire alors vers lui le bouton d'actionnement 220 enfoncé, suivant la direction de translation D (figure 12). Le bouton d'actionnement 220 entraîne alors dans son mouvement de translation le loquet 210, à l'encontre de la poussée des ressorts de compression 230, pour le placer en retrait de sa position de verrouillage. Comme le montre la figure 4, les pattes de blocage 211 se dégagent des encoches 118 du support d'appareillage 110. L'utilisateur peut alors faire basculer le support d'appareillage 110 pour l'abaisser en dessous de la plaque de finition 120. Lors de la translation du bouton d'actionnement 220, les ailettes 221A du bouton d'actionnement 220 naviguent dans les rainures étagées 121A de la plaque de finition 120. Au bout de la course de la translation, lorsque la tranche avant du loquet 210 est en appui contre des parties 122 de la plaque de finition 120, les ailettes 221A du bouton d'actionnement 220 sont bloquées dans les étages inférieurs des rainures étagées 121A de la plaque de finition 120 qui maintiennent le bouton d'actionnement 220 en position d'actionnement abaissée en coopération avec le loquet 210 (figure 4).

L'utilisateur relâche alors son effort de traction sur le bouton d'actionnement 220. Le loquet 210 est poussé en sens inverse par les ressorts de compression 230 en direction de sa position de verrouillage d'origine. Il entraîne avec lui le bouton d'actionnement 220 dont les plots 225 coopèrent avec les encoches 213 du loquet 210. Lors de ce mouvement de recul du bouton d'actionnement 220, les ailettes 221A naviguent en sens inverse dans les rainures étagées 121A de la plaque de finition 120. En bout de course, les ailettes 221A, du bouton d'actionnement 220 arrivent dans les étages supérieurs desdites rainures étagées 121A et le ressort de compression 240 pousse alors le bouton d'actionnement 220 pour le placer dans sa position de repos relevée dans laquelle il ne coopère plus avec le loquet 210 puisque ses plots 225 sont extraits des encoches 213 (voir figure 5).

Ce faisant, le support d'appareillage 110 continue à être basculé vers sa position abaissée. Tout au long de la majeure partie du mouvement de basculement du support d'appareillage 110, la face avant 110A dudit support n'entre pas en contact avec les extrémités des pattes de blocage 211 du loquet 210 qui revient en position de verrouillage. Ce n'est qu'en bout de course de basculement, juste avant d'arriver en position abaissée, que les extrémités des pattes de blocage 211 du loquet 210 glissent sur les pans 117A en biseau de la face avant 110A du support d'appareillage 110 (voir figure 6) avant de s'engager dans les encoches 117 supérieures du support d'appareillage 110 pour bloquer ce dernier en position abaissée (voir figure 7).

En position abaissée, le couvercle 130 ferme l'ouverture centrale de la plaque de finition 120 et masque le support d'appareillage 110 placé sous celle-ci (voir figure 8).

Comme le montre la figure 6, le glissement des pattes de blocage 211 du loquet 210 sur les pans 117A en biseau du support d'appareillage 110 provoque un léger déplacement vers l'avant du loquet 210 (à l'opposé de sa position de verrouillage). Ce léger déplacement inverse du loquet 210 n'a aucune incidence sur le ressort de compression 240, interposé entre le loquet 210 et le bouton d'actionnement 220 revenu en position de repos relevée, car l'extrémité correspondante de ce ressort de compression 240 glisse alors contre le fond du renfoncement 215 de forme allongée du loquet 210 et ledit ressort de compression 240 n'est pas déplacé.

La même manoeuvre décrite ci-dessus, dite « poussée-tirée » du bouton d'actionnement 220, est réalisée par l'utilisateur pour ouvrir l'appareillage électrique 100 fermé, tel que représenté sur la figure 8, et placer le support d'appareillage 110 en position relevée donnant accès aux parties fonctionnelles des mécanismes d'appareillage 1, 2 qu'il supporte.

Il convient juste de noter que partant de sa position abaissée, lorsque le support d'appareillage 110 est libéré du loquet 210 de verrouillage, le mécanisme de basculement 400 provoque automatiquement le basculement dudit support vers la position relevée.

Comme le montre la figure 9, tout au long de la majeure partie du mouvement de basculement du support d'appareillage 110, la face avant 110A dudit support n'entre pas en contact avec les extrémités des pattes de blocage 211 du loquet 210 qui revient en position de verrouillage depuis sa position de déverrouillage. Ce n'est qu'en bout de course de basculement, juste avant d'arriver en position relevée, que les extrémités des pattes de blocage 211 du loquet 210 glissent sur les pans 118A en biseau de la face avant 110A du support d'appareillage 110 (voir figure 9) avant de s'engager dans les encoches 118 inférieures du support d'appareillage 110 pour bloquer ce dernier en position relevée (voir figure 1).

## Revendications

1. Appareillage électrique (100) qui comprend :
- une plaque de finition (120) présentant une ouverture,
- un support d'appareillage (110) monté à basculement au travers de ladite ouverture entre une position abaissée dans laquelle il s'étend en dessous de la plaque de finition (120) et une position relevée dans laquelle il s'étend en majeure partie au-dessus de la plaque de finition (120), et
- un système de verrouillage (200) qui comporte un loquet (210) monté en translation par rapport à la plaque de finition (120) dans un plan parallèle au plan moyen (P) de cette dernière, des moyens de rappel (230) qui poussent en permanence le loquet (210) vers une position de verrouillage dans laquelle il fait saillie à l'intérieur de ladite ouverture pour bloquer ledit support d'appareillage (110) dans l'une ou l'autre de ses positions abaissée et relevée, et un bouton d'actionnement (220) du loquet (210), qui, dans une position d'actionnement, est apte à être déplacé en translation parallèlement au plan moyen de la plaque de finition (120) pour tirer le loquet (210) à l'encontre desdits moyens de rappel (230) en retrait de sa position de verrouillage,
**caractérisé en ce que** le bouton d'actionnement (220) est adapté à être déplacé en translation suivant un axe (X) perpendiculaire au plan moyen (P) de la plaque de finition (120), entre une position de repos relevée dans laquelle il est placé à distance du loquet (210) et la position d'actionnement abaissée dans laquelle il coopère avec le loquet (210).

2. Appareillage électrique (100) selon la revendication précédente, dans lequel le loquet (210) s'étend en longueur sur toute la largeur du support d'appareillage (110) et il comprend, au moins à une extrémité, une patte de blocage (211) adaptée à s'engager dans deux encoches (117,118) prévues dans deux coins de la face avant (110A) du support d'appareillage (110) pour bloquer ledit support d'appareillage (110) dans ses positions abaissée et relevée.

3. Appareillage électrique (100) selon la revendication précédente, dans lequel le loquet (210) comprend à chaque extrémité une patte de blocage (211) et le support d'appareillage (110) comporte en correspondance quatre encoches (117,118) prévues aux quatre coins de sa face avant.

4. Appareillage électrique (100) selon l'une des revendications 2 et 3, dans lequel lesdits moyens de rappel (230) qui poussent en permanence le loquet (210) vers sa position de verrouillage, comprennent deux ressorts de compression (230) qui interviennent entre des parties (123) de la plaque de finition (120) et les extrémités du loquet (210).

5. Appareillage électrique (100) selon l'une des revendications 2 à 4, dans lequel le support d'appareillage (110) présente une face avant (110A) plane et il comporte un pan (117a,118A) en biseau qui établit la jonction entre ladite face avant (110A) et le bord de chaque encoche (117,118).

6. Appareillage électrique (100) selon l'une des revendications précédentes, dans lequel il est prévu un moyen de rappel (240), interposé entre le loquet (210) et le bouton d'actionnement (220), qui pousse en permanence ledit bouton d'actionnement (220) vers sa position de repos relevée.

7. Appareillage électrique (100) selon la revendication précédente, dans lequel ledit moyen de rappel est un ressort de compression (240) dont une partie est logée dans un premier logement (223) prévu en creux dans la face arrière (220B) du bouton d'actionnement (220) et dont une autre partie prend appui sur le fond d'un deuxième logement (215) prévu en creux dans la face avant du loquet (210).

8. Appareillage électrique (100) selon la revendication précédente, dans lequel ledit deuxième logement (215) présente une forme allongée suivant la direction (D) de translation du loquet.

9. Appareillage électrique (100) selon l'une des revendications 7 et 8, dans lequel ledit deuxième logement (215) présente une forme oblongue.

10. Appareillage électrique (100) selon l'une des revendications précédentes, dans lequel il est prévu sur le bouton d'actionnement (220) et sur le loquet (210) des moyens de coopération de forme (225,213) qui coopèrent ensemble lorsque ledit bouton d'actionnement est en position d'actionnement abaissée.

11. Appareillage électrique (100) selon la revendication précédente, dans lequel lesdits moyens de coopération de forme (225,213) sont des moyens d'emboîtement.

12. Appareillage électrique (100) selon l'une des revendications 10 et 11, dans lequel lesdits moyens de coopération de forme comprennent au moins un plot (225) prévu en saillie sur la face arrière (220B) du bouton d'actionnement (220) et au moins un logement (213) de forme complémentaire au plot, prévu en creux dans la face avant du loquet (210).

13. Appareillage électrique (100) selon l'une des revendications précédentes, dans lequel le bouton d'actionnement (220) est monté dans une ouverture traversante de la plaque de finition (120) dont le bord (121) est adapté à guider les mouvements de translation du bouton d'actionnement (220).

14. Appareillage électrique (100) selon la revendication précédente, dans lequel le bouton d'actionnement (220) comporte deux ailettes (221A,222A) en saillie sur deux bords parallèles (221,222) et la plaque de finition comporte sur sa face arrière, le long de deux côtés du bord de ladite ouverture qui s'étendent selon la direction de translation du bouton d'actionnement parallèle au plan moyen de ladite plaque de finition, deux rainures étagées (121A) dans lesquelles sont engagées lesdites ailettes.

15. Appareillage électrique (100) selon l'une des revendications précédentes, dans lequel le loquet (210) est une plaquette allongée montée dans un logement délimité entre la face arrière de la plaque de finition (120) et une plaque de fermeture (300) fixée sur la face arrière de la plaque de finition.

## Patentansprüche

1. Elektrische Gerätschaft (100), die umfasst:
- eine mit einer Öffnung versehene Abdeckplatte (120),
- eine Gerätehalterung (110), die durch eine Kippbewegung durch die Öffnung zwischen einer gesenkten Position, in der sie sich unter der Abdeckplatte (120) befindet und einer erhobenen Position, in der sie sich zum Großteil über der Abdeckplatte (120) befindet, montiert ist, und
- ein Verriegelungssystem (200), das ein Schnappschloss (210) umfasst, welches in Bezug zur Abdeckplatte (120) in einer zur mittleren Ebene (P) dieser Abdeckplatte parallelen Ebene verschiebbar montiert ist, sowie Rückholmittel (230), die das Schnappschloss (210) permanent in eine Verriegelungsposition drücken, in der es auf der Innenseite der Öffnung hervorsteht, um die Gerätehalterung (110) in einer der beiden Positionen - gesenkt oder erhoben - zu blockieren, sowie einen Betätigungsknopf (220) für das Schnappschloss (210), der in einer Betätigungsposition parallel zur mittleren Ebene der Abdeckplatte (120) verschoben werden kann, um das Schnappschloss (210) in Richtung der Rückholmittel (230) hinter seine Verriegelungsposition zu ziehen,
**dadurch gekennzeichnet, dass** der Betätigungsknopf (220) entlang einer zur mittleren Ebene (P) der Abdeckplatte (120) senkrechten Achse (X) zwischen einer erhobenen Ruheposition, in der er sich vom Schnappschloss (210) entfernt befindet, und der gesenkten Betätigungsposition, in der er mit dem Schnappschloss (210) zusammenwirkt, verschoben werden kann.

2. Elektrische Gerätschaft (100) nach vorausgehendem Anspruch, bei der sich das Schnappschloss (210) der Länge nach über die gesamte Breite der Gerätehalterung (110) erstreckt und es zumindest an einem Ende eine Sperrklammer (211) umfasst, die in zwei, an zwei Ecken der Vorderseite (110A) der Gerätehalterung (110) vorgesehene Aussparungen (117, 118) eingreifen kann, um die Gerätehalterung (110) in ihren gesenkten und erhobenen Positionen zu blockieren.

3. Elektrische Gerätschaft (100) nach vorausgehendem Anspruch, bei der das Schnappschloss (210) an jedem Ende eine Sperrklammer (211) umfasst und die Gerätehalterung (110) dem entsprechend an den vier Ecken ihrer Vorderseite vorgesehene vier Aussparungen (117, 118) umfasst.

4. Elektrische Gerätschaft (100) nach einem der Ansprüche 2 und 3, bei der die Rückholmittel (230), die das Schnappschloss (210) permanent in seine Verriegelungsposition drücken, zwei Druckfedern (230) umfassen, die zwischen Abschnitten (123) der Abdeckplatte (120) und den Enden des Schnappschlosses (210) zum Wirken kommen.

5. Elektrische Gerätschaft (100) nach einem der Ansprüche 2 bis 4, bei der die Gerätehalterung (110) eine ebene Vorderseite (110A) aufweist und eine abgeschrägte Kante (117a,118A) umfasst, die zwischen dieser Vorderseite (110A) und dem Rand jeder Aussparung (117,118) die Verbindung herstellt.

6. Elektrische Gerätschaft (100) nach einem der vorausgehenden Ansprüche, bei der ein Rückholmittel (240) vorgesehen ist, das zwischen dem Schnappschloss (210) und dem Betätigungsknopf (220) zwischengestellt ist und das permanent den Betätigungsknopf (220) in Richtung seiner erhobenen Ruheposition drückt.

7. Elektrische Gerätschaft (100) nach vorausgehendem Anspruch, bei der das Rückholmittel eine Druckfeder (240) ist, deren ein Abschnitt in einer ersten, in einer Einbuchtung auf der Rückseite (220B) des Betätigungsknopfes (220) vorgesehenen Aufnahme (223) untergebracht ist, und deren anderer Abschnitt auf dem Boden einer in einer Einbuchtung auf der Vorderseite des Schnappschlosses (210) vorgesehenen zweiten Aufnahme (215) zum Aufliegen kommt.

8. Elektrische Gerätschaft (100) nach vorausgehendem Anspruch, bei der die zweite Aufnahme (215) eine in Richtung (D) der Verschiebung des Schnappschlosses längliche Form aufweist.

9. Elektrische Gerätschaft (100) nach einem der Ansprüche 7 und 8, bei der die zweite Aufnahme (215) eine Langlochform aufweist.

10. Elektrische Gerätschaft (100) nach einem der vorausgehenden Ansprüche, bei der auf dem Betätigungsknopf (220) und auf dem Schnappschloss (210) Formschlussmittel (225,213) vorgesehen sind, die zusammenwirken, wenn sich der Betätigungsknopf in der abgesenkten Betätigungsposition befindet.

11. Elektrische Gerätschaft (100) nach vorausgehendem Anspruch, bei der die Formschlussmittel (225,213) Verfalzungsmittel sind.

12. Elektrische Gerätschaft (100) nach einem der Ansprüche 10 und 11, bei der die Formschlussmittel mindestens einen Kontakt (225) umfassen, der auf der Rückseite (220B) des Betätigungsknopfes (220) abstehend vorgesehen ist, sowie mindestens eine Aufnahme (213) mit einer zum Kontakt komplementären Form, die in einer Einbuchtung auf der Vorderseite des Schnappschlosses (210) vorgesehen ist.

13. Elektrische Gerätschaft (100) nach einem der vorausgehenden Ansprüche, bei der der Betätigungsknopf (220) in eine durchgehende Öffnung der Abdeckplatte (120) montiert ist, deren Rand (121) sich dazu eignet, die Verschiebungsbewegungen des Betätigungsknopfes (220) zu führen.

14. Elektrische Gerätschaft (100) nach vorausgehendem Anspruch, bei der der Betätigungsknopf (220) an zwei parallelen Rändern (221, 222) zwei abstehende Rippen (221A,222A) umfasst und die Abdeckplatte auf ihrer Rückseite entlang von zwei Seiten des Randes der Öffnung, die sich in der zur mittleren Ebene der Abdeckplatte parallelen Verschiebungsrichtung des Betätigungsknopfes erstrecken, zwei abgesetzte Rillen (121A) umfasst, in die die Rippen eingreifen.

15. Elektrische Gerätschaft (100) nach einem der vorausgehenden Ansprüche, bei der das Schnappschloss (210) ein in eine Aufnahme, die zwischen der Rückseite der Abdeckplatte (120) und einer auf der Rückseite der Abdeckplatte fixierten Verschlussplatte (300) begrenzt ist, montiertes längliches Plättchen ist.

## Claims

1. An electrical accessory (100) that comprises:
· a finishing plate (120) presenting an opening;
· an accessory support (110) that is mounted to tilt through said opening between a lowered position in which it extends below the finishing plate (120), and a raised position in which a major portion thereof extends above the finishing plate (120); and
· a locking system (200) that comprises: a catch (210) that is mounted to move in translation relative to the finishing plate (120) in a plane that is parallel to the mean plane (P) thereof; return means (230) that push the catch (210) continuously towards a locking position in which it projects into said opening so as to block said accessory support (110) in one or the other of its lowered or raised positions; and an actuator button (220) for actuating the catch (210), which button, in its actuated position, is capable of being moved in translation parallel to the mean plane of the finishing plate (120), so as to pull the catch (210) against said return means (230) and away from its locking position;
the electrical accessory being **characterized in that** the actuator button (220) is adapted to be moved in translation along an axis (X) that is perpendicular to the mean plane (P) of the finishing plate (120), between its raised rest position in which it is positioned at a distance from the catch (210), and its lowered actuated position in which it co-operates with the catch (210).

2. An electrical accessory (100) according to the preceding claim, wherein the catch (210) extends lengthwise over the entire width of the accessory support (110) and, at at least one end, includes a blocking tab (211) that is adapted to be engaged in two notches (117, 118) provided in two corners of the front face (110A) of the accessory support (110), so as to block said accessory support (110) in its lowered and raised positions.

3. An electrical accessory (100) according to the preceding claim, wherein, at each end, the catch (210) includes a blocking tab (211), and the accessory support (110) correspondingly includes four notches (117, 118) that are provided in the four corners of its front face.

4. An electrical accessory (100) according to claim 2 or claim 3, wherein said return means (230) that push the catch (210) continuously towards its locking position comprise two compression springs (230) that intervene between portions (123) of the finishing plate (120) and the ends of the catch (210).

5. An electrical accessory (100) according to any one of claims 2 to 4, wherein the accessory support (110) presents a plane front face (110A), and it includes a chamfered face (117A,118A) that establishes the junction between said front face (110A) and the edge of each notch (117, 118).

6. An electrical accessory (100) according to any preceding claim, wherein return means (240) are provided, interposed between the catch (210) and the actuator button (220), that push said actuator button (220) continuously towards its raised rest position.

7. An electrical accessory (100) according to the preceding claim, wherein said return means are a compression spring (240) having a portion that is housed in a first housing (223) that is recessed in the rear face (220B) of the actuator button (220), and having another portion that bears against the bottom of a second housing (215) that is recessed in the front face of the catch (210).

8. An electrical accessory (100) according to the preceding claim, wherein said second housing (215) presents a shape that is elongate along the direction (D) of movement in translation of the catch.

9. An electrical accessory (100) according to claim 7 or claim 8, wherein said second housing (215) presents a shape that is oblong.

10. An electrical accessory (100) according to any preceding claim, wherein shape co-operation means (225, 213) are provided on the actuator button (220) and on the catch (210), which shape co-operation means co-operate with each other when said actuator button is in its lowered actuated position.

11. An electrical accessory (100) according to the preceding claim, wherein said shape-cooperation means (225, 213) are interfitting means.

12. An electrical accessory (100) according to claim 10 or claim 11, wherein said shape co-operation means comprise at least one lug (225) that projects from the rear face (220B) of the actuator button (220), and at least one housing (213) of shape that is complementary to the lug and that is recessed in the front face of the catch (210).

13. An electrical accessory (100) according to any preceding claim, wherein the actuator button (220) is mounted in a through opening of the finishing plate (120) that has an edge (121) that is adapted to guide the movements in translation of the actuator button (220).

14. An electrical accessory (100) according to the preceding claim, wherein the actuator button (220) includes two fins (221A, 222A) that project from two parallel edges (221, 222), and the finishing plate includes, on its rear face, along two sides of the edge of said opening that extend along the direction of movement in translation of the actuator button, parallel to the mean plane of said finishing plate, two stepped grooves (121A) in which said fins are engaged.

15. An electrical accessory (100) according to any preceding claim, wherein the catch (210) is an elongate plate that is mounted in a housing defined between the rear face of the finishing plate (120) and a closure plate (300) that is fastened on the rear face of the finishing plate.
